# EUROPÄISCHE PATENTSCHRIFT

(11) **EP 1 270 902 B1**
(45) Veröffentlichungstag und Bekanntmachung des Hinweises auf die Patenterteilung: **21.10.2009**
(21) Anmeldenummer: 02405367.0
(22) Anmeldetag: 06.05.2002
(51) Int. Cl.: F02C 7/26, F02C 9/28

(54) **Verfahren zum Hochfahren einer Gasturbinenanlage**
Procedure for the start of a gas turbine system
Procédé de démarrage d'un système de turbine à gaz

(30) Priorität: 22.06.2001 CH 11462001
(43) Veröffentlichungstag der Anmeldung: 02.01.2003
(73) Patentinhaber: Alstom Technology Ltd, 5400 Baden (CH)
(72) Erfinder: Knoepfel, Hans Peter, 5605 Dottikon (CH); Küenzi, Thomas, 4127 Birsfelden (CH); Rebhan, Dieter, 79774 Albbruck (DE); Stalder, Marcel, 5513 Klingnau (CH)

(56) Entgegenhaltungen:
- EP-A- 0 976 982
- GB-A- 2 348 675
- US-A- 4 716 719
- US-A- 5 533 329
- US-A- 5 916 126

## Beschreibung

### TECHNISCHES GEBIET

Die vorliegende Erfindung betrifft ein Verfahren zum Hochfahren einer Gasturbinenanlage gemäss dem Oberbegriff des Anspruchs 1.

### STAND DER TECHNIK

Gasturbinen werden zunehmend mit Mehrfachbrennern mit magerer Vormischtechnik ausgerüstet. Dabei werden der Brennstoff und die Verbrennungsluft möglichst gleichmässig vorgemischt und erst dann der Flamme zugeführt. Wird dies mit einem hohen Luftüberschuss vollzogen, so entstehen relativ niedrige Flammentemperaturen und damit eine geringe Bildung von Stickoxiden.

Entsprechend der Geometrie von Gasturbinen wird die Mehrzahl von Brennern häufig ringförmig in Form von Ringbrennkammern angeordnet. Solche Gasturbinen-Ringbrennkammern sind beispielsweise aus EP-B1-0 597 138, US-A-4,100,733, US-A-5,303,542, US-A-5,402,634, EP-A2-802,310 oder EP-A1-976,982 bekannt. Die flüssigen oder gasförmigen Brennstoffe werden dabei den in ein- und mehrfachen Ringen angeordneten Brennern über Brennstoffzufuhrringe zugeführt, wo sie in die Ringbrennkammer eingedüst und verbrannt werden.

Bei Verwendung von gasförmigem Brennstoff können je nach Art des Belastungszustandes, der Anzahl der in Betrieb befindlichen Brenner, der Emissionswerte oder ähnlicher Kenngrössen der Gasturbine unterschiedliche Betriebsarten der individuellen Brenner mehr oder weniger vorteilhaft sein. Bei Doppelkegelbrennern kann beispielsweise im sogenannten Pilotmodus der gasförmige Brennstoff in der Mitte an der Basis des Doppelkegelbrenners durch die sogenannte Pilotgasbelochung der Verbrennungsluft beigemischt werden. Die so gefahrenen Brenner zeichnen sich durch eine sehr stabile Flamme mit hoher Flammentemperatur aus, was auf der anderen Seite aber auch unvorteilhafte Emissionswerte nach sich zieht. Im sogenannten Vormischmodus andererseits wird bei Doppelkegelbrennern der gasförmige Brennstoff in der Kegelregion durch die Vormischgasbelochung seitlich der Verbrennungsluft beigemischt. Die Flammen von Brennern im Vormischmodus zeichnen sich durch eine niedrige Flammentemperatur und die damit verbundenen vorteilhaften Emissionswerte aus. Sie sind aber wesentlich weniger stabil als im Pilotmodus betriebene Brenner. Ein Doppelkegelbrenner kann grundsätzlich derart gebaut sein, dass beide obigen Betriebsarten gefahren werden können, nacheinander sowie parallel. Je nachdem wird der gasförmige Brennstoff durch die eine oder die andere Belochung eingedüst.

Im Betriebspunkt der Gasturbine bzw. im oberen Lastbereich müssen die Brenner bei hohen Feuerungstemperaturen und tiefen NOₓ-Emissionen arbeiten. Die Löschgrenze der Brenner im Vormischbetrieb liegt daher zwangsläufig bei sehr hohen Feuerungstemperaturen. Für das Anfahren und den Teillastbetrieb der Gasturbine und den damit verbundenen tieferen Feuerungstemperaturen ist daher eine zusätzliche Pilotgaseindüsung an den Brennern erforderlich. Dadurch wird eine stabile Diffusionsverbrennung bei tiefen Temperaturen gewährleistet. Beim Hochfahren und Belasten der Gasturbine muss also mittels Stell- und Regelventilen vom Pilotbetrieb (also Diffusionsverbrennung) auf Vormischbetrieb umgeschaltet werden. Die Umschaltung hat bei einer korrekten Temperatur der Flamme in einem engen Intervall stattzufinden.

Dokument US-A-5 916 126 offenbart ein solches Verfahren gemäß dem Oberbegriff des unabhängigen Anspruchs 1.

Wird eine Gasturbine der eingangs genannten Art vom Leerlaufbetrieb in den Lastbetrieb hochgefahren, so treten häufig unerwünschte Effekte auf. Unter anderem sind in gewissen Phasen des Hochfahrens und bei Teillastbetrieb, also während des Pilotbetriebes, starke Rauch- und Stickoxidentwicklung möglich, Brenner können auslöschen, ausserdem kann unvorteilhaftes Pulsieren der Gasturbine auftreten. Aus diesen Gründen darf im Pilotbetrieb nicht mit zu tiefen oder hohen Flammtemperaturen gefahren werden, die ein Eingreifen des Gasturbinenschutzes notwendig machen. Andererseits führt eine verfrühte Umschaltung vom Pilot auf Vormischbetrieb bei einer zu tiefen Flammtemperatur zum Löschen der Flamme im Vormischbetrieb.

Eine zuverlässige Umschaltung vom Pilot- in den Vormischbetrieb sollte bei einer konstanten Flammtemperatur stattfinden. Leider kann die Flammtemperatur nicht mit ausreichender Genauigkeit direkt gemessen werden. Auch die Messung der NOₓ-Emissionen- als Indikator für die Flammtemperatur - ist in diesem Fall nicht genau genug. Anstelle dessen wird die Temperatur des Abgases gemessen und die Umschaltung eingeleitet, wenn die gemessene mittlere Abgastemperatur einen bestimmten fixen Wert erreicht. Leider kann auch dieser Ausweg nur zu einer ungefähren Flammtemperatur führen, da sich die Beziehung zwischen der Flammtemperatur und der gemessenen Abgastemperatur verändern kann. Diese hängt u.a. von den Umgebungsbedingungen, dem internen Lufthaushalt, dem Status von Dichtungen, den Spielen in der Gasturbinenanlage, der Alterung, der Durchwärmung der Maschine und anderen Faktoren ab.

### DARSTELLUNG DER ERFINDUNG

Der Erfindung liegt demnach die Aufgabe zugrunde, ein Verfahren anzugeben, mit welchem sowohl ein Hochfahren als auch ein Teillastbetrieb einer mit gasförmigem Brennstoff betriebenen Gasturbine auf sichere, unkomplizierte und schadstoffarme Weise möglich ist und ein optimaler Punkt zur Umschaltung von Pilot-auf Vormischbetrieb gefunden werden kann, wobei schädliche Pulsationen in der Brennkammer der Gasturbinenanlage vermieden werden sollen.

Erfindungsgemäss wird die Aufgabe durch ein Verfahren gemäss dem Oberbegriff des Anspruchs 1 dadurch gelöst, dass
(a) der Umschaltzeitpunkt vom Pilotbetrieb auf Vormischbetrieb von einer variablen Umschalttemperatur T_{SWO} abhängt und diese Umschalttemperatur T_{SWO} aus in der Flamme der Brennkammer vorkommenden Pulsationen bestimmt wird, wobei
(b) die Gasturbinenanlage mit einem konstanten Lastgradienten ΔL hochgefahren wird und ohne das Auftreten von Pulsationen die Umschaltung eingeleitet wird, sofern eine obere, maximale Umschalttemperatur T_{SWOhot} erreicht wird und
(c) beim Auftreten von Pulsationen der Lastgradient ΔL gesenkt wird und die Umschaltung eingeleitet wird, sofern eine untere, minimale Umschalttemperatur T_{SWOcold} erreicht wird und
(d) beim Auftreten von weiteren Pulsationen bei einer bestimmten Abgastemperatur T_{Pulslimit} die Umschaltung eingeleitet wird, sobald eine variable Umschalttemperatur T_{SWO} die untere, minimale Umschalttemperatur T_{SWOcold} überschreitet, wobei die variable Umschalttemperatur T_{SWO} aus der Abgastemperatur T_{Pulslimit} durch Reduktion um einen bestimmten Betrag ΔT_{SWO} bestimmt wird und
(e) sofern die variable Umschalttemperatur T_{SWO} die untere, minimale Umschalttemperatur T_{SWOcold} nicht erreicht, die Gasturbinenanlage für eine bestimmte Zeit bei einer Abgastemperatur unterhalb der Abgastemperatur T_{Pulslimit}, bei welcher Pulsationen auftreten, gefahren wird, und danach
(f) die Gasturbinenanlage mit dem gesenkten Lastgradienten ΔL entsprechend (c) weiter beaufschlagt wird.

Mittels einer intelligenten Prozessführung unter Zuhilfenahme einer variablen Definierung der Umschalttemperatur werden Sekundäreffekte, welche die Messung der Abgastemperatur beeinflussen und eine Bestimmung der wirklichen Flammtemperatur erschweren oder gar verunmöglichen (Transienten), auf einfache Weise ausgeschaltet. Sie erlaubt ein gefahrloses Belasten der Brennkammer ohne lang andauernde, hohe und damit schädliche Pulsationen bei kürzestmöglicher Aufwärmzeit der Gasturbinenanlage sowie ein sicher beherrschbares Umschalten des Pilot- auf Vormischbetriebs, was sich positiv auf die Verfügbarkeit der Anlage auswirkt.

Der gesenkte Lastgradient aus Schritt (c) und (f) kann vorteilhaft indirekt über eine Erhöhung der Abgastemperatur ΔT₁ in einem Zeitintervall bestimmt werden. Dieser Gradient der Abgastemperatur ΔT₁ kann als Funktion aus der Differenz von der unteren, minimalen Umschalttemperatur T_{SWOcold} und der Abgastemperatur T_{Pulslimit}, bei welcher Pulsationen auftreten, variabel bestimmt werden. Vorteilhaft wird die variable Umschalttemperatur T_{SWO} in Schritt (d) um weniger gesenkt als die Abgastemperatur T_{Pulslimit} in Schritt (e).

Weiter besteht die Möglichkeit, dass die Gasturbinenanlage mit einer ersten Pilotstufe hochgefahren wird und der gesenkte Lastgradient nach dem Auftreten von Pulsationen von einer zweiten Pilotstufe oder von einer Vormischstufe im Mischbetrieb mit der ersten Pilotstufe erzeugt wird.

Die Pulsationen in der Brennkammer können direkt gemessen oder sie können indirekt über andere Betriebskenngrössen festgestellt werden. In das Verfahren können neben der Abgastemperatur weitere Betriebskenngrössen einbezogen werden, um Pulsationen im Pilotbetrieb zu verhindern. Pulsationen können zusätzlich auch auf andere Art vermieden werden, z.B. durch Änderung des Impulses oder des Drallwinkels des eingedüsten Pilotgasstroms.

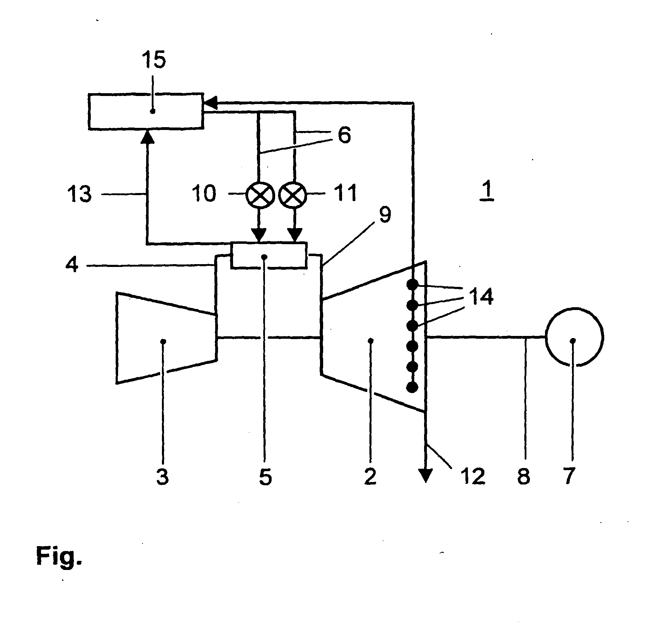

### KURZE ERLÄUTERUNG DER ZEICHNUNG

Die einzige Figur zeigt eine Gasturbinenanlage zur Durchführung des erfindungsgemässen Verfahrens. Es sind nur die Merkmale dargestellt, welche für das unmittelbare Verständnis der Erfindung notwendig sind.

### WEGE ZUR AUSFÜHRUNG DER ERFINDUNG

Es ist Verfahren zum Hochfahren einer Gasturbinenanlage 1, wie sie beispielsweise in der einzigen Figur dargestellt ist, offenbart. In einer Brennkammer 5 der Gasturbinenanlage 1 wird ein Brennstoff 6 zusammen mit verdichteter Luft 4, welche aus einem Verdichter 3 stammt, verbrannt. Die Brennkammer 5 ist, wie aus dem Stand der Technik bekannt, als Ringbrennkammer ausgestaltet. Die dabei entstehenden heissen Verbrennungsgase 9 werden durch eine Gasturbine 2 geleitet und danach werden die Abgase 12 auf bekannte Weise abgeleitet. Die Gasturbine 2 ist über eine Welle 8 sowohl mit dem Verdichter 3 als auch mit einem Generator 7 verbunden.

Bei dem erfindungsgemässen Verfahren wird der Brennstoff 6 über eine Mehrzahl von Pilotbrennern 10 und Vormischbrennern 11 in die Brennkammer 6 eingedüst. Die Gasturbinenanlage 1 wird in einem ersten Schritt mit einem bestimmten Lastgradienten ΔL hochgefahren, wobei während des Zündens und in einem unteren Lastbereich die Brennkammer 5 im Pilotbetrieb durch die Pilotbrenner 10 betrieben wird und zu einem bestimmten Zeitpunkt die Brennkammer 5 von Pilotbetrieb auf Vormischbetrieb umgeschaltet wird. Dieser Umschaltzeitpunkt ist von einer variablen Umschaltemperatur T_{SWO} der Abgase 12 abhängig. Zu diesem Zweck findet am Ende der Gasturbine 2 eine Temperaturmessung 14 statt. Eine übergeordnete Kontrolleinheit 15 übernimmt die Regelung der Brennstoffzufuhr für die Pilot- und Vormischbrenner 10, 11. Zusätzlich wird die Gasturbine 2 auf bekannte Weise mit dem Generator 6 synchronisiert.

Werden beim Hochfahren der Gasturbinenanlage 1 keine Pulsationen durch eine Pulsationsmessung 13 in der Brennkammer 5 gemessen, also beispielsweise Pulsationen grösser als 20mbar und 0.5sec, kann die Gasturbinenlage 1 mit einem Lastgradienten, z.B. ΔL = 10MW/min, belastet werden bis entweder Pulsationen auftreten oder bis eine bei früheren Versuchen gefundene Umschalttemperatur T_{SWOhot}, welche bei durchgewärmter Maschine bestimmt wurde, erreicht wird. Bei Erreichen der T_{SWOhot} ohne Pulsationen wird direkt ein Umschalten vom Pilot-in den Vormischbetrieb eingeleitet.

Werden beim Belasten der Brennkammer 5 bei dem gewählten Lastgradienten ΔL oder während des Hochfahrens oder auf minimaler Last nach dem Synchronisieren in der Brennkammer 5 Pulsationen gemessen, wird für das weitere Belasten der Gasturbinenanlage 1 ein Temperaturgradient ΔT₁ der Abgastemperatur anstelle des Lastgradienten ΔL aufgeschaltet. Dieser Temperaturgradient ΔT₁ gibt die weitere Belastung der Brennkammer 5 vor. Der Temperaturgradient, beispielsweise ΔT₁ = 5K/min, wird so klein gewählt, dass die Pulsationsgrenze beim Belasten der Brennkammer 5 im Pilotbetrieb sanft angefahren werden kann. Entsprechend resultiert ein kleinerer Lastgradient ΔL als normalerweise gefahren wird. Die Umschaltung wird eingeleitet, sofern eine definierte untere, minimale Umschalttemperatur T_{SWOcold} erreicht wurde. Diese Umschalttemperatur T_{SWOcold} wurde aus früheren Versuche bei kalter oder ungenügend durchgewärmter Gasturbinenanlage 1 bestimmt.

Vorteilhaft an dieser Prozessführung ist, dass eine durchgewärmten Gasturbinenanlage 1 - bei der keine Pulsationen auftreten - mit einem grossen Lastgradienten ΔL belastet werden kann und bei einer kalten oder ungenügend durchwärmten Gasturbinenanlage 1 aber - mit Pulsationen beim Hochfahren oder im Pilotbetrieb - eine teilweise Durchwärmung der Gasturbinenlage 1 ermöglicht wird.

Bei kalter Gasturbinenanlage 1 wird sodann beim weiteren Belasten der Brennkammer 5 bei einer bestimmen Flammtemperatur die Pulsationsgrenze, also beispielsweise Pulsationen grösser 20mbar und 0.5sec, erreicht. Um die Gasturbine 1 nicht übermässig zu strapazieren, wird beim Erreichen der Pulsationsgrenze die dazugehörende Abgastemperatur T_{Pulslimit} gespeichert. Gleichzeitig wird die Belastung der Brennkammer 5 reduziert, d.h. die aktuelle und gespeicherte Abgastemperatur T_{Pulslimit} wird um einen definierten Betrag, beispielsweise ΔT_{Puls} = -10K, reduziert und die Gasturbinenanlage 1 mit dieser Temperatur gefahren, so dass die Pulsationen auf diese Weise vermieden werden, da die Gasturbinenanlage 1 unterhalb des festgestellten, schädlichen Limits gefahren wird.

In einem nächsten Schritt wird die variable Umschalttemperatur T_{SWO} definiert. Diese Grösse lässt sich aus dem gespeicherten Wert T_{Pulslimit} ableiten, indem dieser Wert um einen definierten Betrag (z.B. ΔT_{SWO} = -5K) reduziert wird, wobei der Betrag von ΔT_{SWO} kleiner sei als der Betrag von ΔT_{Puls}.

Ist die so bestimmte Umschalttemperatur T_{SWO} grösser als eine definierte Umschalttemperatur T_{SWOcold}, welche ebenfalls aus früheren Versuche bei kalter oder ungenügend durchgewärmter Gasturbinenanlage 1 bestimmt wurde, kann eine Umschaltung in den Vormischbetrieb eingeleitet werden, andernfalls ist die Gasturbinenanlage 1 auf der von einem Regler begrenzten Abgastemperatur T_{Pulslimit} weiter für eine definierte Zeit (z.B. 10min) durchzuwärmen.

Nach Ablauf dieser Durchwärmzeit wird die Gasturbinenanlage 1 wiederum mit dem oben genannten Temperaturgradienten ΔT₁ = 5K/min weiter belastet, bis entweder die als minimale Umschalttemperatur definierte T_{SWOcold} erreicht wird, sofern nicht - bei weiterhin ungenügend durchgewärmter Maschine - Pulsationen ein weiteres Belasten der Brennkammer 5 verhindern. In diesem Falle wird die neu gefundene Abgastemperatur als T_{Pulslimit} gespeichert (Überschreiben der bisher gespeicherten T_{Pulslimit}), die Abgastemperatur vom Regler um den oben genannten Betrag ΔT_{Puls} reduziert und eine neue variable Umschalttemperatur T_{SWO} definiert.

Dieser Zyklus wird solange durchfahren, bis die Durchwärmung der Gasturbinenlage 1 soweit fortgeschritten ist, dass ein Umschalten mit der als T_{SWOcold} definierten Abgastemperatur sicher beherrscht wird.

Verfeinerungen des dargestellten Verfahrens lassen sich erzielen, indem neben der eingangs erwährten Pulsationsmessungen weitere Messgrössen, welche einen Einfluss auf die Umschalttemperatur nehmen, in die Prozessführung eingebunden werden. Zu nennen sind dabei die Messung der Umgebungstemperatur, die Verdichterendtemperatur, verschiedene Materialtemperaturen wie z.B. Rotor, Gasturbinengehäuse, Abgasgehäuse, relativer Druckabfall über die Brenner, Linerkühlung, etc.

Weiterhin vorstellbar ist auch eine Prozessführung, welche nur die oben genannten Messgrössen Temperaturen, relative Druckabfälle etc. anstelle der Pulsationen berücksichtigen. Dabei sind mittels Versuche Parameterwerte festzustellen, welche einen pulsationsarmen Betrieb von einem pulsationsreichen Betrieb trennen. Eine Belastung der Gasturbinenlage 1 erfolgt dann entlang der gefundenen Grenze zwischen pulsationsarmen und pulsationsreichem Betriebgebieten, indem dem üblichen Last / Temperaturregler ein übergeordneter ,Parameterwert'-Regler beigestellt wird. Dadurch werden die im Last / Temperaturregler definierten Lastgradienten soweit begrenzt, dass ein pulsationsreicher Pilotbetrieb verhindert wird.

Ein weiterer Ansatz zur Beschränkung der im Pilotbetrieb feststellbaren Pulsationen ist die Änderung der Brennergeometrie in geeigneter Weise. Dazu sind insbesondere zu nennen:
- Änderung des Impulses des eingedüsten Pilotgases durch Vergrösserung/Verkleinerung der Pilotgasaustrittsfläche.
- Änderung des Drallwinkels, mit dem das Pilotgas eingedüst wird. Damit wird das Verhältnis des axialen zum radialem Impuls verändert.
- Gestaffelte Eindüsung des Pilotgases.

Neben diesen Änderungen auf der Pilotgasseite sind ausserdem Änderungen auf der Vormischgasseite denkbar:
- Gestaffeltes Umschalten einzelner oder zu Gruppen zusammengestellte Brenner von Pilot- auf Vormischbetrieb.
- Anfetten/Abmagern einzelner Brenner oder zu Gruppen zusammengeschalteter Brenner, um tiefere Abgastemperaturen im Vormischbetrieb zu fahren.

Eine erfindungsgemässe Variante der oben beschriebenen erfindungsgemässen Prozessführung ist eine Kombination von Geometrieänderung am Brennersystem und eine Prozessführung, bei welcher die Pulsationsmessung und/oder weitere den pulsationsarmen Betriebsbereich beschreibende Messgrössen bzw. Parameterwerte eingebunden werden.

Zur Verdeutlichung soll als Beispiel genannt werden: Eine erste Pilotstufe wird benötigt, um das Zünden und Hochfahren auf Nenndrehzahl zu bewerkstelligen. Eine weitere Belastung der Brennkammer kann mit der ersten Stufe bis zu dem Punkt erfolgen, wo Pulsationen erstmals gemessen werden. Dieser vom Umgebungstemperatur, vom Zustand der Maschine sowie weiteren Faktoren beeinflusste Punkt ist variabel, d.h. er kann nicht einer fixen Abgastemperatur zugeordnet werden.

Sobald also unzulässig hohe Pulsationen gemessen werden, wird eine zweite Pilotstufe dazugeschaltet und die weitere Belastung der Brennkammer 5 erfolgt über die zweite Pilotstufe. Diese kann z.B. über eine bzw. mehrere im Umfang verteilte zusätzliche Düsen, welche direkt im Frontpanel der Brennkammer 5 integriert sind, ausgeführt werden. Über Stichleitungen sind die die zweite Pilotstufe bildende Düsen mit einer Ringleitung verbunden, die wiederum über ein Regelventil mit der Gasversorgung verbunden ist. Auch eine andersartige Gruppierung der Pilotbrenner 10 ist denkbar.

Wichtig in diesem Zusammenhang ist die Feststellung, dass die zweite Pilotstufe nur zum Einsatz kommt, wenn die erste Pilotstufe alleine eine nicht ausreichende pulsationsarme Befeuerung der Brennkammer erzielt, um einen stabilen Betrieb des Vormischbrenners 11 zu erreichen.

Weiter vorstellbar ist auch eine Anordnung und ein Verfahren der einen Mischbetrieb der Pilot- und der Vormischstufe enthält. Dabei wird die Gasturbinenanlage 1 mit der Pilotstufe gezündet und die Maschine auf Nenndrehzahl beschleunigt. Nach dem Synchronisieren des Generators 7 wird die Brennkammer 5 weiterbelastet über die erste Pilotstufe bis wiederum unzulässig hohe Pulsationen gemessen werden. Ein weiteres Belasten der Brennkammer wird dann mittels eines Mischbetriebes durchgeführt, d. h. zusätzlich zu der nun fix eingedüsten Pilotgasmenge über die Pilotstufe wird Vormischgas über die Vormischstufe eingedüst, solange bis in den reinen Vormischbetrieb geschaltet werden kann.

### BEZUGSZEICHENLISTE

- 1: Gasturbinenanlage
- 2: Gasturbine
- 3: Verdichter
- 4: Verdichtete Luft
- 5: Brennkammer
- 6: Brennstoff
- 7: Generator
- 8: Welle
- 9: Verbrennungsgase
- 10: Pilotbrenner
- 11: Vormischbrenner
- 12: Abgas
- 13: Pulsationsmessung
- 14: Temperaturmessung
- 15: Kontrolleinheit

- ΔL: Lastgradient
- T_{SWO}: Umschalttemperatur, variabel
- T_{SWOhot}: Umschalttemperatur, bei durchgewärmter Gasturbine 1
- T_{SWOcold}: Umschalttemperatur, bei kalter Gasturbine 1
- ΔT_{SWO}: Reduktion der Umschalttemperatur T_{SWO} zu T_{Pulslimit}
- ΔT₁: Temperaturgradient
- T_{Pulslimit}: Abgastemperatur bei Pulsationsgrenze
- ΔT_{Puls}: Reduktion der Abgastemperatur

## Patentansprüche

1. Verfahren zum Hochfahren einer Gasturbinenanlage (1), bei welcher in einer Brennkammer (5) mindestens ein Brennstoff (6) verbrannt wird, die dabei entstehenden heissen Verbrennungsgase (9) durch eine Gasturbine (2) geleitet werden und danach als Abgase (12) abgeleitet werden, und bei welchem Verfahren mindestens ein Brennstoff (6) über eine Mehrzahl von Pilotbrennern (10) und Vormischbrennern (11) in die Brennkammer (5) eingedüst wird, wobei die Gasturbine (2) mit einem bestimmten Lastgradienten (ΔL) hochgefahren wird und während des Starts und in einem unteren Lastbereich die Brennkammer (5) im Pilotbetrieb betrieben wird und zu einem bestimmten Zeitpunkt die Brennkammer (5) vom Pilotbetrieb auf Vormischbetrieb umgeschaltet wird, wobei der Umschaltzeitpunkt von einer vorher bestimmten Abgastemperatur (T_{SWOhot}) abhängig ist,
**dadurch gekennzeichnet, dass**
(a) der Umschaltzeitpunkt vom Pilotbetrieb auf Vormischbetrieb von einer variablen Umschalttemperatur (T_{SWO}) abhängt und diese Umschalttemperatur (T_{SWO}) aus in der Flamme der Brennkammer (5) vorkommenden Pulsationen bestimmt wird, wobei
(b) die Gasturbinenanlage (1) mit einem konstanten Lastgradienten (ΔL) hochgefahren wird und ohne das Auftreten von Pulsationen die Umschaltung eingeleitet wird, sofern eine obere, maximale Umschalttemperatur (T_{SWOhot}) erreicht wird und
(c) beim Auftreten von Pulsationen der Lastgradient (ΔL) gesenkt wird und die Umschaltung eingeleitet wird, sofern eine untere, minimale Umschalttemperatur (T_{SWOcold}) erreicht wird und
(d) beim Auftreten von weiteren Pulsationen bei einer bestimmten Abgastemperatur (T_{Pulslimit}) die Umschaltung eingeleitet wird, sobald eine variable Umschalttemperatur (T_{SWO}) die untere, minimale Umschalttemperatur (T_{SWOcold}) überschreitet, wobei die variable Umschalttemperatur (T_{SWO}) aus der Abgastemperatur (T_{Pulslimit}) durch Reduktion um einen bestimmten Betrag (ΔT_{SWO}) bestimmt wird und
(e) sofern die variable Umschalttemperatur (T_{SWO}) die untere, minimale Umschalttemperatur (T_{SWOcold}) nicht erreicht, die Gasturbinenanlage (1) für eine bestimmte Zeit bei einer Abgastemperatur unterhalb der Abgastemperatur (T_{Pulslimit}), bei welcher Pulsationen auftreten, gefahren wird, und danach
(f) die Gasturbinenanlage (1) mit dem gesenkten Lastgradienten (ΔL) entsprechend (c) weiter beaufschlagt wird.

2. Verfahren nach Anspruch 1,
**dadurch gekennzeichnet, dass**
der gesenkte Lastgradient (ΔL) aus den Schritten (c) und (f) des Anspruchs 1 über einen Gradienten der Abgastemperatur (ΔT₁) bestimmt wird.

3. Verfahren nach Anspruch 2,
**dadurch gekennzeichnet, dass**
der Gradient der Abgastemperatur (ΔT₁) als Funktion aus der Differenz von der unteren, minimalen Umschalttemperatur (T_{SWOcold}) und der Abgastemperatur (T_{Pulslimit}), bei welcher Pulsationen auftreten, bestimmt wird.

4. Verfahren nach Anspruch 1,
**dadurch gekennzeichnet, dass**
die variable Umschalttemperatur (T_{SWO}) aus Abgastemperatur (T_{Pulslimit}) durch eine Reduktion um einen bestimmten Betrag (ΔT_{SWO}) bestimmt wird, wobei dieser Betrag (ΔT_{SWO}) kleiner ist die Reduktion (ΔT_{Pulslimit}) der Abgastemperatur (T_{Pulslimit}) in Schritt (e) des Anspruchs 1.

5. Verfahren nach Anspruch 1,
**dadurch gekennzeichnet, dass**
die Gasturbinenanlage (1) mit einer ersten Pilotstufe hochgefahren wird und der gesenkte Lastgradient (ΔL) aus den Schritten (c) und (f) des Anspruchs 1 nach dem Auftreten von Pulsationen von einer zweiten Pilotstufe erzeugt wird.

6. Verfahren nach Anspruch 1,
**dadurch gekennzeichnet, dass**
die Gasturbine (2) mit einer ersten Pilotstufe hochgefahren wird und der gesenkte Lastgradient (ΔL) aus den Schritten (c) und (f) des Anspruchs 1 nach dem Auftreten von Pulsationen von einer Vormischstufe erzeugt wird.

7. Verfahren nach Anspruch 1,
**dadurch gekennzeichnet, dass**
während des Verfahrens gemäss Anspruch 1 einzelne oder zu Gruppen zusammengestellte Brenner (10, 11) von Pilot- auf Vormischbetrieb umgestellt werden.

8. Verfahren nach Anspruch 1,
**dadurch gekennzeichnet, dass**
während des Verfahrens gemäss Anspruch 1 einzelne oder zu Gruppen zusammengeschalteter Brenner (10, 11) mit Brennstoff (6) an- oder abgereichert werden.

9. Verfahren nach Anspruch 1,
**dadurch gekennzeichnet, dass**
die Pulsationen in der Brennkammer (5) direkt gemessen werden.

10. Verfahren nach Anspruch 1,
**dadurch gekennzeichnet, dass**
die Pulsationen in der Brennkammer (5) indirekt über Betriebskenngrössen festgestellt werden.

11. Verfahren nach Anspruch 1,
**dadurch gekennzeichnet, dass**
in das Verfahren neben der Abgastemperatur weitere Betriebskenngrössen einbezogen werden, um Pulsationen im Pilotbetrieb zu verhindern.

12. Verfahren nach Anspruch 1,
**dadurch gekennzeichnet, dass**
der Impulses des eingedüsten Brennstoffstroms der Pilotbrenner (10) verändert wird.

13. Verfahren nach Anspruch 1,
**dadurch gekennzeichnet, dass**
der Drallwinkel des eingedüsten Brennstoffstroms der Pilotbrenner (10) verändert wird.

## Claims

1. Method for running up a gas turbine plant (1), in which at least one fuel (6) is burnt in a combustion chamber (5) and the hot combustion gases (9) occurring at the same time are led through a gas turbine (2) and thereafter discharged as exhaust gases (12), in which method at least one fuel (6) is injected into the combustion chamber (5) via a plurality of pilot burners (10) and premix burners (11), the gas turbine (2) being run up at a specific load gradient (ΔL), and the combustion chamber (5) being operated in the pilot mode during the start-up and in a lower load range, and, at a specific time point, the combustion chamber (5) being changed over from the pilot mode to the premix mode, the changeover time point being dependent on a predetermined exhaust-gas temperature (T_{SWOhot}),
**characterized in that**
(a) the changeover time point from the pilot mode to the premix mode depends on a variable changeover temperature (T_{SWO}) and this changeover temperature (T_{SWO}) is determined from pulsations occurring in the flame of the combustion chamber (5), while
(b) the gas turbine plant (1) is run up at a constant load gradient (ΔL) and the changeover is initiated without the occurrence of pulsations, in so far as an upper maximum changeover temperature (T_{SWOhot}) is reached, and,
(c) when pulsations occur, the load gradient (ΔL) is lowered and the changeover is initiated, in so far as a lower minimum changeover temperature (T_{SWOcold}) is reached, and,
(d) when further pulsations occur, at a specific exhaust-gas temperature (Tₚᵤₗₛₗᵢₘᵢₜ), the changeover is initiated, as soon as a variable changeover temperature (T_{SWO}) exceeds the lower minimum changeover temperature (T_{SWOcold}), the variable changeover temperature (T_{SWO}) being determined from the exhaust-gas temperature (Tₚᵤₗₛₗᵢₘᵢₜ) by reduction by a specific amount (ΔT_{SWO}), and,
(e) in so far as the variable changeover temperature (T_{SWO}) does not reach the lower minimum changeover temperature (T_{SWOcold}), the gas turbine plant (1) is operated for a specific time at an exhaust-gas temperature below the exhaust-gas temperature (Tₚᵤₗₛₗᵢₘᵢₜ) at which pulsations occur, and, thereafter,
(f) the gas turbine plant (1) is further acted upon at the lowered load gradient (ΔL) according to (c).

2. Method according to Claim 1, **characterized in that** the lowered load gradient (ΔL) is determined from the steps (c) and (f) of Claim 1 via a gradient of the exhaust-gas temperature (ΔT₁).

3. Method according to Claim 2, **characterized in that** the gradient of the exhaust-gas temperature (ΔT₁) is determined as a function of the difference between the lower minimum changeover temperature (T_{SWOcold}) and the exhaust-gas temperature (Tₚᵤₗₛₗᵢₘᵢₜ) at which pulsations occur.

4. Method according to Claim 1, **characterized in that** the variable changeover temperature (T_{SWO}) is determined from the exhaust-gas temperature (Tₚᵤₗₛₗᵢₘᵢₜ) by a reduction by a specific amount (ΔT_{SWO}), this amount (ΔT_{SWO}) being smaller than the reduction (ΔTₚᵤₗₛₗᵢₘᵢₜ) of the exhaust-gas temperature (Tₚᵤₗₛₗᵢₘᵢₜ) in step (e) of Claim 1.

5. Method according to Claim 1, **characterized in that** the gas turbine plant (1) is run up by means of a first pilot stage and the lowered load gradient (ΔL) from the steps (c) and (f) of Claim 1 is generated by a second pilot stage after the occurrence of pulsations.

6. Method according to Claim 1, **characterized in that** the gas turbine (2) is run up by means of a first pilot stage and the lowered load gradient (ΔL) from the steps (c) and (f) of Claim 1 is generated by a premix stage after the occurrence of pulsations.

7. Method according to Claim 1, **characterized in that**, during the method according to Claim 1, individual burners or burners combined into groups (10, 11) are changed over from the pilot mode to the premix mode.

8. Method according to Claim 1, **characterized in that,** during the method according to Claim 1, individual burners or burners combined into groups (10, 11) are enriched or depleted with fuel (6).

9. Method according to Claim 1, **characterized in that** the pulsations in the combustion chamber (5) are measured directly.

10. Method according to Claim 1, **characterized in that** the pulsations in the combustion chamber (5) are detected indirectly via operating characteristics.

11. Method according to Claim 1, **characterized in that** further operating characteristics, in addition to the exhaust-gas temperature, are included in the method, in order to prevent pulsations in the pilot mode.

12. Method according to Claim 1, **characterized in that** the pulse of the injected fuel stream of the pilot burners (10) is modified.

13. Method according to Claim 1, **characterized in that** the swirl angle of the injected fuel stream of the pilot burners (10) is modified.

## Revendications

1. Procédé de démarrage d'une installation (1) de turbine à gaz dans laquelle au moins un combustible (6) est brûlé dans une chambre de combustion (5), les gaz de combustion chauds (9) ainsi dégagés étant passés dans une turbine à gaz (2) et étant ensuite évacués comme gaz d'échappement (12), et dans le procédé :
le ou les combustibles (6) sont injectés dans la chambre de combustion (5) par plusieurs brûleurs pilotes (10) et brûleurs (11) à pré-mélange,
la turbine à gaz (2) est démarrée à un gradient de charge (ΔL) défini, la chambre de combustion (5) étant gérée en fonctionnement pilote pendant le démarrage et dans une plage de faible charge et la chambre de combustion (5) est basculée du fonctionnement pilote au fonctionnement à pré-mélange à un instant défini, l'instant de basculement dépendant de la température (T_{swohot}) définie préalablement,
**caractérisé en ce que**
(a) l'instant de basculement du fonctionnement pilote au fonctionnement à pré-mélange dépend d'une température variable de basculement (T_{swo}), cette température de basculement (T_{swo}) étant déterminée à partir de pulsations qui surviennent dans la flamme de la chambre de combustion (5),
(b) **en ce que** l'installation (1) de turbine à gaz est démarrée à un gradient de charge (ΔL) constant et le basculement est lancé dès qu'une température maximale supérieure de basculement (T_{swonot}) est atteinte si aucune pulsation ne survient,
(c) **en ce que** si des pulsations surviennent, le gradient de charge (ΔL) est abaissé et le basculement est lancé si une température minimale inférieure de basculement (T_{swocold}) est atteinte et
(d) **en ce que** si d'autres pulsations surviennent lorsque les gaz d'échappement ont atteint une température définie (T_{Pulslimit}), le basculement est lancé dès qu'une température variable de basculement (T_{swo}) dépasse la température inférieure minimale de basculement (T_{swocold}), la température variable de basculement (T_{swo}) étant déterminée à partir de la température (T_{Pulslimit}) des gaz d'échappement diminuée d'une valeur définie (ΔT_{swo}),
(e) **en ce que** si la température variable de commutation (T_{swo}) n'atteint pas la température minimale inférieure de basculement (T_{swocold}), l'installation (1) de turbine à gaz est maintenue pendant une durée définie à une température des gaz d'échappement inférieure à la température (T_{Pulslimit}) des gaz d'échappement à laquelle des pulsations surviennent, et
(f) **en ce que** le gradient de charge abaissé (ΔL) est ensuite de nouveau appliqué selon (c) sur l'installation (1) de turbine à gaz.

2. Procédé selon la revendication 1, **caractérisé en ce que** le gradient de charge (ΔL) abaissé des étapes (c) et (f) de la revendication 1 est défini par un gradient (ΔT₁) de la température des gaz d'échappement.

3. Procédé selon la revendication 2, **caractérisé en ce que** le gradient (ΔT₁) de la température des gaz d'échappement est déterminé en fonction de la différence entre la température minimale inférieure de basculement (T_{swocold}) et la température (T_{Pulslimit}) des gaz d'échappement à laquelle des pulsations surviennent.

4. Procédé selon la revendication 1, **caractérisé en ce que** la température variable de basculement (T_{swo}) est déterminée à partir de la température (T_{Pulslimit}) des gaz d'échappement diminuée d'une valeur définie (ΔT_{swo}), cette valeur (ΔT_{swo}) étant inférieure à la réduction (ΔT_{Pulslimit}) de la température (T_{Pulslimit}) des gaz d'échappement de l'étape (e) de la revendication 1.

5. Procédé selon la revendication 1, **caractérisé en ce que** l'installation (1) de turbine à gaz est démarrée avec un premier étage pilote et **en ce que** le gradient de charge (ΔL) abaissé des étapes (c) et (f) de la revendication 1 est formé après l'apparition de pulsations dans un deuxième étage pilote.

6. Procédé selon la revendication 1, **caractérisé en ce que** la turbine à gaz (2) est démarrée avec un premier étage pilote et **en ce que** le gradient de charge (ΔL) abaissé des étapes (c) et (f) de la revendication 1 est formé après l'apparition de pulsations en pré-mélange.

7. Procédé selon la revendication 1, **caractérisé en ce que** pendant le procédé selon la revendication 1, certains brûleurs (10, 11) ou des groupes de ces brûleurs sont basculés du fonctionnement pilote au fonctionnement à pré-mélange.

8. Procédé selon la revendication 1, **caractérisé en ce que** pendant le procédé selon la revendication 1, certains brûleurs (10, 11) ou des groupes de ces brûleurs sont enrichis ou appauvris en combustible (6).

9. Procédé selon la revendication 1, **caractérisé en ce que** les pulsations sont mesurées directement dans la chambre de combustion (5).

10. Procédé selon la revendication 1, **caractérisé en ce que** les pulsations dans la chambre de combustion (5) sont détectées indirectement par des grandeurs caractéristiques de fonctionnement.

11. Procédé selon la revendication 1, **caractérisé en ce qu'**en plus de la température des gaz d'échappement, le procédé utilise d'autres grandeurs caractéristiques de fonctionnement pour empêcher les pulsations en fonctionnement pilote.

12. Procédé selon la revendication 1, **caractérisé en ce que** l'impulsion de l'écoulement de combustible injecté par les brûleurs pilotes (10) est modifiée.

13. Procédé selon la revendication 1, **caractérisé en ce que** l'angle de tourbillonnage de l'écoulement de combustible injecté par les brûleurs pilotes (10) est modifié.
